# EUROPEAN PATENT SPECIFICATION

(11) **EP 3 258 643 B1**
(45) Date of publication and mention of the grant of the patent: **07.11.2018**
(21) Application number: 16175092.2
(22) Date of filing: 17.06.2016
(51) Int. Cl.: H04L 12/24, H04L 12/911

(54) **A METHOD AND APPARATUS FOR PERFORMING RESOURCE MANAGEMENT**
VERFAHREN UND VORRICHTUNG ZUR DURCHFÜHRUNG VON RESSOURCENVERWALTUNG
PROCÉDÉ ET APPAREIL PERMETTANT D'EFFECTUER UNE GESTION DE RESSOURCES

(43) Date of publication of application: 20.12.2017
(73) Proprietor: ADVA Optical Networking Sp.z.o.o., 81-310 Gdynia (PL)
(72) Inventor: Gawron, Zbigniew, 81-603 Gdynia (PL); Prus, Krzysztof, 76-200 Slupsk (PL)
(74) Representative: Isarpatent

(56) References cited:
- US-A1- 2012 254 433
- US-A1- 2013 111 027
- US-A1- 2013 232 483
- US-A1- 2014 047 201
- S. BERGER ET AL: "Security for the cloud infrastructure: Trusted virtual data center implementation", IBM JOURNAL OF RESEARCH AND DEVELOPMENT, vol. 53, no. 4, 1 July 2009 (2009-07-01), pages 6:1-6:12, XP055199690, ISSN: 0018-8646, DOI: 10.1147/JRD.2009.5429060

## Description

The invention relates to a method and apparatus for resource management of distributed cloud resources provided by an infrastructure provider to different clouds or different tenants and relates in particular to a resource broker to manage access to shared infrastructure resources according to cloud resource policies.

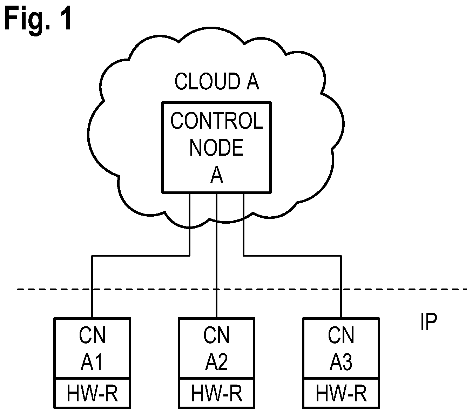

Fig. 1 shows a schematic diagram of a conventional infrastructure topology of a cloud using infrastructure resources provided by an infrastructure provider IP. Cloud A comprises in the illustrated exemplary topology a control node A connected to different computation nodes A1, A2, A3 having associated hardware resources of the infrastructure provider. Each computation node A1, A2, A3 belongs to an infrastructure provider IP who offers the infrastructure as a service to the respective cloud. There can be different clouds using resources R provided by the infrastructure provider IP. A cloud does not only need network resources but also computation and storage resources which can span over multiple distributed nodes and which can vary over time.

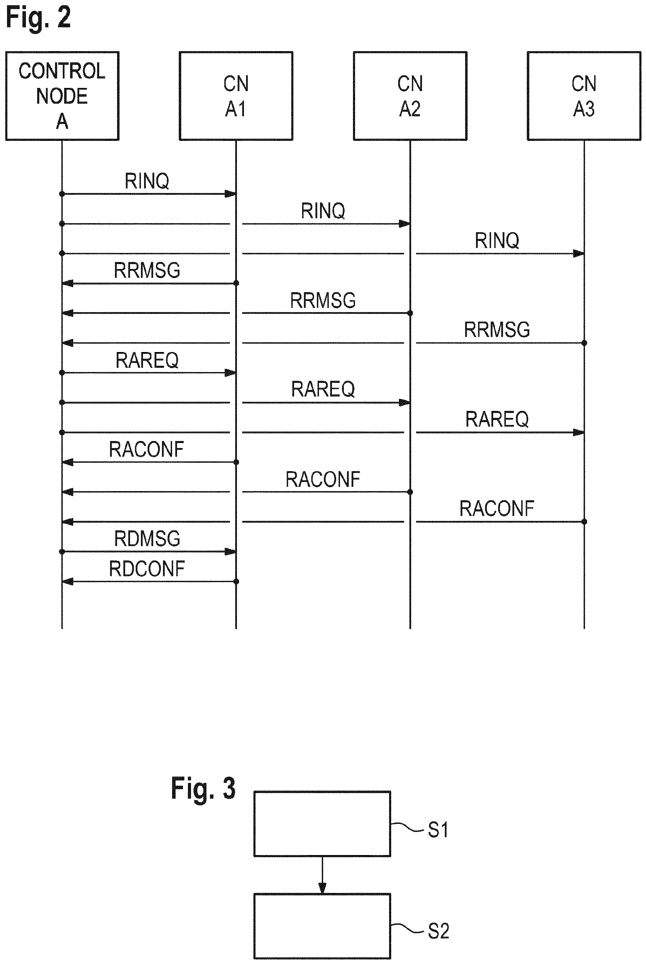

Fig. 2 illustrates a resource allocation as performed in the conventional topology illustrated in Fig. 1. It can be seen in Fig. 2, that control node A of the cloud A does ask each of the computation nodes A1, A2, A3 for available resources of the infrastructure provider. In the given example, control node A of cloud A sends three resource inquiries RINQ to the three different computation nodes A1, A2, A3 of the infrastructure provider inquiring whether the infrastructure provider IP has available resources R. Each of the computation nodes A1, A2, A3 of the infrastructure provider IP sends a separate resource response message RRMSG to the inquiring control node A of cloud A indicating available resources R. Then, the control node A of the cloud sends three separate resource allocation requests RAREQ to the three different computation nodes A1, A2, A3 of the infrastructure provider IP. Each of the computation nodes A1, A2, A3 sends a separate associated resource allocation confirmation RACONF to the control node A of the cloud A. Accordingly, in the given example, the three different computation nodes A1, A2, A3 send three separate resource allocation confirmations RACONF to the inquiring control node A of the cloud A. After having used the assigned resources the control node A can send resource deallocation message RDMSG to a computation node of the infrastructure provider IP for instance to computation node A1 as shown in Fig. 2. After having performed the deallocation the computation node A1 can retransmit a resource deallocation confirmation RDCONF to the control node A of cloud A as illustrated in Fig. 2. The conventional resource allocation as illustrated in Figs. 1, 2 has several drawbacks. Sharing of the same hardware resources for multiple clouds or tenants is not possible. The fixed assignment based on maximum tenant resource requirements of the different clouds is not scalable and does lead to an inefficient resource usage of the different infrastructure resources provided by the infrastructure provider IP.
Berger et al. "Security for the cloud infrastructure: Trusted virtual data center implementation" discloses that the trusted virtual data center is a technology developed to address the need for strong isolation and integrity guarantees in virtualized environments. In this paper, the work available on the TVDc is extended by implementing controlled access to networked storage based on security labels and by implementing management prototypes that demonstrate the enforcement of isolation constraints and integrity checking. In addition the management paradigm for the TVDc is extended with a hierarchical administration model based on trusted virtual domains.
US 2013/232483 discloses a method, an apparatus and an article of manufacture for providing a cloud environment for provisioning a guest virtual machine instance. The method includes selecting at least one machine from a collection of machines as a management node, wherein the at least one machine includes a hypervisor enabled with nested virtualization capability, deploying a plurality of cloud managers on each management node, selecting at least one machine from the collection of machines as a host node, deploying a plurality of level two hypervisors on each host node, forming a plurality of virtual clouds, wherein each virtual cloud contains at least one of the plurality of cloud managers and one of the plurality of level two hypervisors, and provisioning, via the at least one cloud manager, at least one guest virtual machine instance on top of the at least one level two hypervisors.
US 2014/047201 discloses a memory-access-multiplexing memory controller that can multiplex memory accesses from multiple hardware threads, cores, and processors according to externally specified policies or parameters, including policies or parameters set by management layers within a virtualized computer system. A memory-access-multiplexing memory controller provides, at the physical-hardware level, a basis for ensuring rational and policy-driven sharing of the memory-access resource among multiple hardware threads, cores, and/or processors.

Accordingly, it is an object of the present invention to provide a method and apparatus to provide the possibility to share efficiently resources between different clouds.

This object is achieved according to a first aspect of the present invention by a method comprising the features of claim 1.

The invention further provides according to a second aspect an apparatus for resource management of resources comprising the features of claim 11.

Further possible embodiments of the present invention are set out in the appended dependent claims.

In the following, possible embodiments of the different aspects of the present invention are described in more detail with reference to the enclosed figures.
Fig. 1 shows a schematic diagram of a conventional system for performing a resource management;
Fig. 2 shows schematically a signal diagram for illustrating the operation of the conventional system illustrated in Fig. 1;
Fig. 3 shows a flowchart of a possible exemplary embodiment of a method for resource management according to the first aspect of the present invention;
Fig. 4 shows a signal diagram for illustrating a possible exemplary embodiment of a method for performing a resource management according to the first aspect of the present invention;
Fig. 5 shows a block diagram for illustrating a possible exemplary embodiment of an apparatus according to the second aspect of the present invention;
Fig. 6 shows schematically possible exemplary embodiments of a system performing a method for resource management according to the present invention.

As can be seen in Fig. 3, a method for performing a resource management of resources, R, according to the first aspect of the present invention can comprise as illustrated in the exemplary embodiment several steps. In the shown exemplary embodiment, the method for performing a resource management of resources R comprises two main steps.

In a first step S1 resources R provided by an infrastructure provider IP are sliced. A slicing of resource comprises the allocation and/or assignment of resources R at the same time as another subset of the resources R is assigned or allocated to another requestor or requesting cloud or tenant. The resources R can comprise hardware resources including infrastructure hardware resources provided by the respective infrastructure provider IP. These resources R can for instance comprise computation resources for performing computations for different clouds or tenants. These computation resources can comprise any kind of computation or calculation resources such as processing units for instance microprocessors, other computation entities. Resources R can further comprise memory or data storage resources. Resources R can further comprise hypervisor resources. A hypervisor is a software program that can manage multiple operating systems or multiple instances of the same operating system OS on a single computer system. The hypervisor manages the processor, memory and other resources R of the system to allocate what each operating system OS requires. A hypervisor can be implemented by a virtualization manager. An environment provided by the hypervisor is functionally equivalent to the original machine environment. This implies that the same operating systems, tools and application software can be used in the virtual environment. The hypervisor domain allocates the resources R of a computer domain to virtual machines VMs of software appliances. The hypervisor can be adapted for public enterprise cloud requirements. The hypervisor can be used to provide virtual machines VMs and can emulate different pieces of a hardware platform. The hypervisor can emulate in a possible embodiment a complete instruction set such that a virtual machine VM gets the impression that it is running on a completely different CPU architecture than the actual CPU on which it is currently running.

The resources R further comprise peripheral component interconnect, PCIe, resources. The system can comprise components including host processors, memory controllers, media hardware accelerators or peripheral controllers. A memory controller can help a host processor to interface with a local memory peripheral controller to provide the access to all input/output IO devices, peripheral connect interface, PCIe, slots, etc. The IO devices are virtualized in a possible embodiment by a software such as a hypervisor which enables multiple hosts of the system to share the same system resources. A hypervisor or virtual machine monitor VMM can provide a platform for isolated execution of system images and can manage access between system images and the attached IO devices of the system. For PCIe based IO virtualization multiple system images can be implemented on a single host processor of the system. The peripheral component interconnect special interest group has specified a single route input/output virtualization SR-IOV standard. SR-IOV standard can be extended to a multi-route, MR, input/output virtualization MR-IOV standard which allows virtualization of the IO devices between multiple host processors. The multi-route, MR, IO virtualization standard defines a PCIe protocol for virtualizing the peripheral devices and the routing of information between virtualized peripheral devices and multiple host processors in a multi host computing system. For instance, a multi-route MR-IOV switch can be programmed to virtualize the peripheral devices such that each host processor may have access to the peripheral devices connected to the host processor. The resources R can further comprise physical network functions connecting the computation node to the outside world. The network functions can be hosted on ASICs or FPGAs and/or on network interface cards.
The cloud can be used to provide virtual network functions VNFs over a network function virtualization infrastructure NFVI. A virtual network function is a software implementation of network functions normally realized as network appliance. The network functions virtualization infrastructure NFVI is a programmable environment where virtualized network functions VNFs are deployed. The network function virtualization infrastructure NFVI can span different locations. An infrastructure can comprise different kinds of hardware infrastructure resources for multiple clouds or tenants. A computation node which can belong to the infrastructure provider IP offers an infrastructure resource as a service to multiple tenants or clouds. For instance, in a mobile edge computation scenario computation nodes of the infrastructure provider IP can be formed by edge computation nodes. The edge nodes can comprise cell site gateways installed for instance at a cell tower hosting different mobile network operators. Each of the clouds or tenants does not only need isolated network resources but also computation resources which can span multiple virtual machines VMs and network ports and which can vary over time. Computation nodes CNs can comprise processors, memories, storages and IO devices.

In step S1 the resources R are sliced, i.e. divided or partitioned. By using a computation node CN it is possible to assign a subset of processors and/or network interfaces and/or memory resources to two or more separate clouds and to use it at the same time.

In the second step S2 of the exemplary embodiment as illustrated in the flowchart of Fig. 3 the resources R sliced in step S1 are assigned to different clouds or tenants according to predetermined cloud resource policies, CRPs, of the clouds. Each cloud or tenant can comprise in a possible embodiment an associated cloud resource policy, CRP, indicating resources R required by the respective cloud. These resources R can be provided by the infrastructure provider IP. The cloud resource policy, CRP, of the cloud can be configured in a possible embodiment by a cloud administrator CA of the respective clouds. In a possible embodiment each cloud has an associated cloud administrator CA. In the method according to the present invention as illustrated in the embodiment of Fig. 3 the different cloud administrators CAs of the clouds have the capability to acquire or reserve resources R on a need to have a basis, i.e. according to a current resource demand.

The cloud resource policy CRP of a cloud can comprise rules r indicating a guaranteed minimum resource level of resources R to be provided by the infrastructure provider IP to the respective cloud or tenant. The cloud resource policy CRP of a cloud can further comprise rules r indicating a maximum resource level of resources R to be provided by the infrastructure provider to the respective cloud. An infrastructure provider IP can control a full set of different resources R available to the different clouds. Each cloud or tenant can see his resource slice and can vary the number of the virtual machines VMs and interfaces within the boundaries set by the infrastructure provider IP. This further allows sharing the same hardware resources between different clouds. Further, the method or system according to the present invention improve the scalability of resources. A cloud resource policy CRP can be defined and redefined on an infrastructure provider level. A cloud resource policy CRP can define admissible resources R a cloud or tenant can obtain. The cloud resource policy CRP can comprise a guaranteed resource level and/or a maximum resource level so that the essential processes can be guaranteed to work. A cloud administrator CA of a cloud can request additional resources R on a best effort basis. It is possible to define cloud resource policies CRPs and/or resource licenses for different clients of the infrastructure provider IP. Not only a maximum or minimum resource level but also a timeout or period of time or a time schedule for providing resources R can be indicated by the cloud policy rules CPRs.

The cloud resource policies CRPs of the different clouds or tenants can be stored in a possible embodiment in a resource policy database of the infrastructure provider IP. In an embodiment, each cloud can comprise at least one control node which is capable of sending resource inquiries RINQ to the infrastructure provider IP. The resource inquiries RINQ can be sent by the control node of the cloud to a computation node CN of the infrastructure provider IP. In an embodiment, the computation node CN of the infrastructure provider IP can forward the received resource inquiry RINQ to a resource broker component of the infrastructure provider IP which reads the cloud resource policy CRP of the respective cloud from the resource policy database of the infrastructure provider IP. In a possible embodiment, the resource broker of the infrastructure provider IP can then verify or validate whether the resources R requested by the inquiring control node of the respective cloud comply with the cloud resource policy CRP of the respective cloud read from the resource policy database of the infrastructure provider IP. Further, the resource broker of the infrastructure provider IP can send in a possible embodiment a resource response message RRMSG indicating resources R of the infrastructure provider IP which are available and which have been verified by the resource broker of the infrastructure provider. The resource response message RRMSG can be sent by the resource broker to the computation node CN of the infrastructure provider having received the resource inquiry RINQ from the inquiring control node of the cloud. The computation node CN of the infrastructure provider IP can send then a resource allocation confirmation RACONF to the inquiring control node of the cloud indicating the available and verified resources R. The available and verified resources of the infrastructure provider IP as indicated in the resource allocation confirmation can then be allocated by a controller of the infrastructure provider IP automatically to the cloud comprising the inquiring control node.

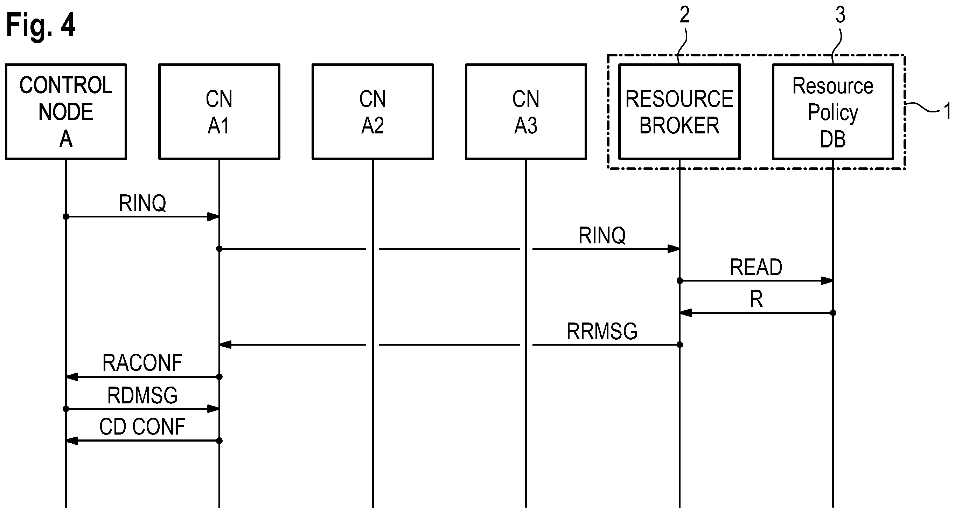

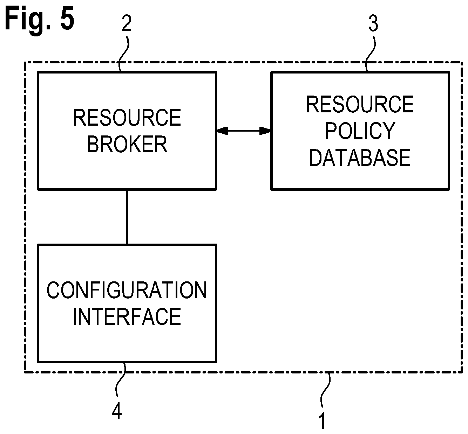

Fig. 4 shows a signal diagram illustrating a possible exemplary embodiment of a system according to the present invention performing a resource management according to the present invention. In the illustrated embodiment an infrastructure provider IP comprises three different computation nodes A1, A2, A3 which can be addressed by a control node of a cloud A as illustrated in the system of Fig. 4. The cloud can form part of a network, in particular the internet. The infrastructure provider IP further comprises a control apparatus 1 having a resource broker or resource broker control unit 2 having access to a resource policy database 3 as illustrated in Figs. 4, 5. In the illustrated exemplary embodiment of Fig. 4, the control node A of the cloud A does first send a resource inquiry RINQ for available resources R to the computation node CN A1 of the infrastructure provider IP to ask for available resources R. The computation node CN A1 of the infrastructure provider IP forwards the received resource inquiry RINQ to the resource broker 2 of the infrastructure provider IP. The resource broker 2 has access to the resource policy database 3 of the infrastructure provider IP and reads the cloud resource policy CRP-A of the respective cloud A from the resource policy database 3 as illustrated in Fig. 4. The resource broker 2 of the infrastructure provider IP then verifies or validates whether the resources R requested by the inquiring control node of cloud A does comply or matches with the cloud resource policy CRP-A of cloud A read from the resource policy database 3 of the infrastructure provider IP. The resource broker 2 of the infrastructure provider IP then sends a resource response message RRMSG to the computation node A1 of the infrastructure provider IP having received the resource inquiry RINQ from the inquiring control node A of cloud A. The resource response message RRMSG can indicate the resources R of the infrastructure provider IP which are currently available and which have been verified or validated by the resource broker 2 of the control apparatus 1 of the infrastructure provider IP according to the cloud resource policy CRP-A of cloud A. The computation node A1 of the infrastructure provider IP then sends a resource allocation confirmation RACONF to the inquiring control node of cloud A indicating the available and verified resources R. If the requested resources are not available or do not comply with the cloud resource policy CRP of cloud A the control node A of cloud A gets an error message and/or a resource allocation denial message. The available and verified resources R of the infrastructure provider IP as indicated by the transmitted resource allocation confirmation RACONF can be allocated automatically by a controller of the infrastructure provider IP to cloud A comprising the inquiring control node A. Cloud A then uses the requested and allocated resources R. When the resources R are no longer needed the control node A of the cloud A can send a resource deallocation message RDMSG to the respective computation node CN of the infrastructure provider IP as shown in Fig. 4. After having deallocated the resource R computation node A1 can send a resource deallocation confirmation RDCONF to the control node of cloud A as shown in Fig. 4. The process illustrated in Fig. 4 can be performed in real-time. If the resource inquiry RINQ is denied because it does form a violation of the cloud resource policy CRP or because the infrastructure provider IP has no sufficient resources available, the tenant or client may send the RINQ to another infrastructure provider IP or modify his request. In a possible implementation, the denying first infrastructure provider IP may provide the requesting control node A of cloud A with an address of another second IP which may provide the requested resources R. In a possible implementation, if a resource request RINQ of a cloud is denied the requesting control node of the cloud receives further a message from the resource broker 2 of the infrastructure provider IP via the control node CN informing the requesting control node of the cloud about the reason why its resource request has been denied. The information message can indicate that the infrastructure provider IP has currently not sufficient resources R of a requested resource type and/or that the requested resources R do not match the cloud resource policy CRP of the requesting cloud. For instance, the number of resources R of a specific resource type requested by the control node CN of the cloud may exceed a threshold value specified in a rule r of the cloud resource policy CRP. The control node can receive also an invitation to change the current cloud resource policy CRP through a manual or automatic reconfiguration or adaption of the cloud resource policy CRP so that its resource request or resource inquiry RINQ can be fulfilled by the infrastructure provider IP. The information message can further indicate that the requested resources R are currently denied because the request does not match a timespan defined by a rule r of the cloud resource policy CRP but will be available in the future when the defined timespan has been reached. In a possible embodiment, the control nodes, the computation nodes CN and the control apparatus 1 have access to a system clock time of the system.

Fig. 5 shows a schematic block diagram with possible exemplary embodiment of an apparatus 1 according to a second aspect of the present invention. The illustrated apparatus 1 is adapted to perform a resource management of resources R. The resources R can comprise hardware resources including infrastructure hardware resources provided by the infrastructure provider. The resources R can comprise computation resources, hypervisor resources and/or peripheral component interconnect PCIe resources. The apparatus 1 comprises in the illustrated embodiment a resource broker 2 of the infrastructure provider IP. The resource broker 2 is adapted and configured to slice resources R provided by the infrastructure provider IP and to assign the sliced resources to different clouds on the basis of the predetermined rules r of the cloud resource policies CRPs of the respective clouds. In the illustrated embodiment the cloud resource policies CRPs of the different clouds are stored in a resource policy database 3 of the infrastructure provider IP. In the illustrated embodiment in Fig. 5 the apparatus 1 further comprises a configuration interface 4. The resource broker 2 can comprise at least one processing unit or microprocessor for processing messages and/or cloud resource policies CRPs. The processing unit can comprise a policy configuration interface 4 for configuration of cloud resource policies CRPs for different clouds using resources R provided by the infrastructure provider IP. The configuration can be performed by a cloud administrator CA of the respective cloud. The cloud resource policy CRP comprising a set of rules r is editable by a user through the configuration interface 4. The resource broker 2 has access to the resource policy database 3 of the infrastructure provider IP and can upload configured cloud resource policies CRPs or read or download cloud resource policies CRPs from the resource policy database 3 of the infrastructure provider IP. Each cloud resource policy CRP comprises a set of configurable resource allocation rules r which may be displayed to the editing user.

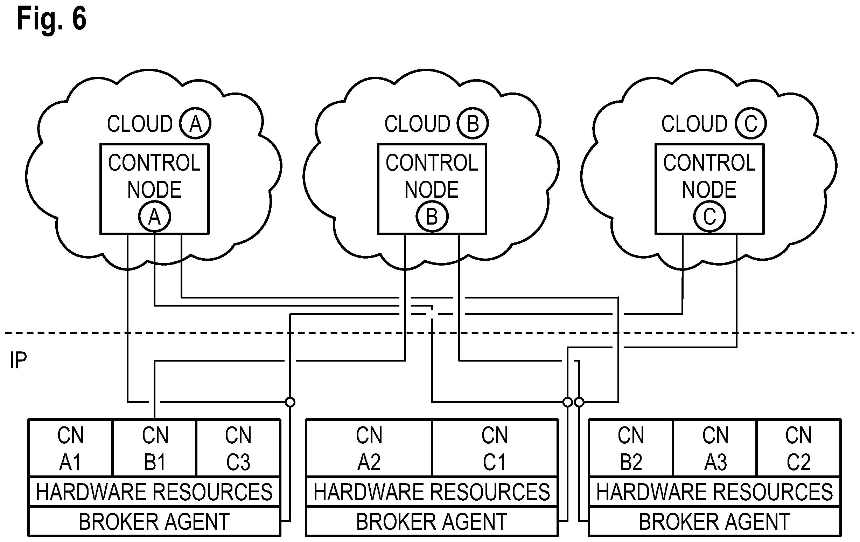

The cloud resource policies CRPs stored in the resource policy database 3 of the apparatus 1 can comprise a set of different rules r. The rules r can indicate a guaranteed minimum resource level of resources R of the same or different type to be provided by the infrastructure provider IP for the respective cloud. The rules r can further comprise rules indicating a maximum resource level of resources R to be provided by the infrastructure provider IP of the respective cloud. The rules r can also indicate a timeout or specific time after which no resources of any type or no resources of a specific type are allocated to the respective cloud. Further, rules r can indicate a period of time or timespan where resources R of the infrastructure provider IP can be allocated to the inquiring cloud. The resource broker 2 of the apparatus 1 as illustrated in Fig. 5 comprises several interfaces and/or ports for connecting the resource broker 2 of the infrastructure provider IP to the computation nodes CNs of the infrastructure provider for example to the computation nodes CN A1, CN A2, CN A3 as illustrated in Fig. 4. The resource broker 2 can be a central unit of the system or network of the infrastructure provider IP. The resource broker 2 can also be implemented in at least one computation node CN of the infrastructure provider IP. The resource policy database 3 can be a central resource policy memory or storage or a local memory implemented in the resource broker 2 of the infrastructure provider IP. The resource broker component 2 can form a broker agent with different hardware resources provided by the infrastructure provider IP as illustrated in Fig. 6. The system according to the present invention allows to form a usage checking of different resources R. It is further possible to share infrastructure resources R between different clouds or tenants. Further, the method and system improves the scalability of resources R. In a possible embodiment, the resource broker 2 provides a policy validation and/or verification. It is possible using the cloud resource policies CRPs to restrict resource consumption of infrastructure resources R provided by the infrastructure provider IP. The resource broker component 2 manages the cloud access to access capacity in line with the respective cloud resource policy CRP of the cloud. The resources R can in particular comprise hypervisor resources and PCIe resources. The controller of the infrastructure provider IP can control a full set of resources R and can provide sliced hypervisor and/or PCIe resources being currently available to different tenants or clouds. Each tenant or cloud can see his hypervisor resource slice and/or PCIe resource slice and can vary the number of virtual machines VMs and interfaces and storage volume within the boundaries set by the infrastructure provider IP. The system provides a higher scalability of the network function virtualized infrastructure NFVI. If different clouds transmit resource requests or resource inquiries RINQ at the same time to the infrastructure provider IP a priority of the different clouds can be specified in the cloud resource policies of the respective clouds. Alternatively, the resource request first received by the broker 2 can be handled first by the broker 2.

## Claims

1. A method for resource management of cloud resources, comprising the steps of:
slicing (S1) resources provided by an infrastructure provider comprising a computation node, a control apparatus (1) and a resource policy database (3); and
assigning (S2) the sliced resources to different clouds according to predetermined cloud resource policies of the respective clouds, each of the clouds comprising at least one control node;
sending, by the control node of the respective cloud, a resource inquiry, RINQ, for available resources of the infrastructure provider to the computation node;
forwarding, by the computation node of the infrastructure provider, the received RINQ to a resource broker (2) of the control apparatus (1) which reads the cloud resource policy of the respective cloud from the resource policy database (3); and
sending, by the resource broker (2), a resource response message, RRMSG, indicating resources of the infrastructure provider which are available and which have been verified by the resource broker (2) of the infrastructure provider to the computation node of the infrastructure provider having received the RINQ from the inquiring control node of the respective cloud.

2. The method according to claim 1, wherein each cloud comprises at least one associated cloud resource policy, indicating resources obtainable by the respective cloud.

3. The method according to claim 1 and 2, wherein the cloud resource policy of a cloud is configured by a cloud administrator of the respective cloud.

4. The method according to any of the preceding claims 1 to 3, wherein the cloud resource policy of a cloud comprises rules indicating a generated minimum resource level of resources to be provided by the infrastructure provider for the respective cloud and/or rules indicating a maximum resource level of resources to be provided by the infrastructure provider for the respective cloud and/or rules indicating a timeout, period of time, or time schedule for providing resources by the infrastructure provider for the respective cloud.

5. The method according to any of the preceding claims 1 to 4, wherein the cloud resource policies of the different clouds are stored in the resource policy database (3) of said infrastructure provider.

6. The method according to claim 1, further comprising:
verifying, by the resource broker (2), whether the resources requested by the inquiring control node of the respective cloud comply with the cloud resource policy of the respective cloud read from the resource policy database (3) of the infrastructure provider.

7. The method according to claim 6, wherein the computation node of the infrastructure provider sends a resource allocation confirmation, RACONF, to the inquiring control node of the cloud indicating the available and verified resources.

8. The method according to claim 7, wherein the available and verified resources of the infrastructure provider as indicated in the RACONF are allocated by the control apparatus (1) to the cloud comprising the inquiring control node.

9. The method according to any of the preceding claims 1 to 8, wherein the resources comprise hardware resources including infrastructure hardware resources provided by the infrastructure provider.

10. The method according to any of the preceding claims 1 to 9, wherein the resources comprise computation resources for performing computations and/or hypervisor resources and/or peripheral component interconnect resources and/or data storage and/or memory and/or network resources.

11. An apparatus (1) for resource management of resources, R, comprising:
a resource broker (2) of an infrastructure provider, said resource broker (2) being adapted to slice resources provided by the infrastructure provider and to assign the sliced resources to different clouds on the basis of predetermined cloud resource policies of the respective clouds stored in a resource policy database (3) of said infrastructure provider,
said infrastructure provider comprising a computation node, CN, a control apparatus (1) and the resource policy database (3), and said control apparatus (1) comprising said resource broker (2),
each of the clouds comprising at least one control node configured to send a resource inquiry, RINQ, for available resources of the infrastructure provider to the computation node,
the computation node of the infrastructure provider being configured to forward the received RINQ to the resource broker (2), which is configured to read the cloud resource policy of the respective cloud from the resource policy database (3), and
the resource broker (2) being further configured to send a resource response message, RRMSG, indicating resources of the infrastructure provider which are available and which have been verified by the resource broker (2) of the infrastructure provider to the computation node of the infrastructure provider having received the RINQ from the inquiring control node of the cloud.

12. The apparatus according to claim 11, wherein the resource broker (2) comprises a processing unit having a policy configuration interface (4) for configuration of cloud resource policies of different clouds using resources provided by the infrastructure provider by cloud administrators of the respective clouds.

13. The apparatus according to claim 11 or 12, wherein the resource broker (2) of the infrastructure provider has access to the resource policy database (3) for uploading configured cloud resource policies and/or loading cloud resource policies from the resource policy database (3) of the infrastructure provider.

14. The apparatus according to any of the claims 11 to 13, wherein a cloud resource policy of a cloud stored in the resource policy database (3) of the infrastructure provider comprises rules indicating a guaranteed minimum resource level of resources to be provided by the infrastructure provider to the respective cloud and/or rules indicating a maximum resource level of resources to be provided by the infrastructure provider to the respective cloud and/or rules indicating a timeout or period of time for providing resources by the infrastructure provider to the respective cloud.

## Patentansprüche

1. Verfahren zum Ressourcenmanagement von Cloud-Ressourcen, umfassend folgende Schritte:
Slicen (S1) von Ressourcen, die durch einen Infrastrukturanbieter bereitgestellt werden, die einen Berechnungsknoten, eine Steuerungsvorrichtung (1) und eine Ressourcenrichtliniendatenbank (3) umfassen, und
Zuweisen (S2) der geslicten Ressourcen zu verschiedenen Clouds gemäß zuvor festgelegten Cloud-Ressourcenrichtlinien der jeweiligen Clouds, wobei jede der Clouds mindestens einen Steuerungsknoten umfasst,
Senden, durch den Steuerungsknoten der jeweiligen Cloud, einer Ressourcenanfrage (*Resource Inquiry, RINQ*) nach verfügbaren Ressourcen des Infrastrukturanbieters an den Berechnungsknoten,
Weiterleiten, durch den Berechnungsknoten des Infrastrukturanbieters, der empfangenen RINQ an einen Ressourcenmakler (2) der Steuerungsvorrichtung (1), der die Cloud-Ressourcenrichtlinie der jeweiligen Cloud aus der Ressourcenrichtliniendatenbank (3) liest, und
Senden, durch den Ressourcenmakler (2), einer Ressourcenantwortnachricht (*Resource Response Message, RRMSG*), die Ressourcen des Infrastrukturanbieters angibt, die verfügbar sind und die durch den Ressourcenmakler (2) des Infrastrukturanbieters verifiziert wurden, an den Berechnungsknoten des Infrastrukturanbieters, der die RINQ von dem anfragenden Steuerungsknoten der jeweiligen Cloud empfangen hat.

2. Verfahren nach Anspruch 1, wobei jede Cloud mindestens eine verknüpfte Cloud-Ressourcenrichtlinie umfasst, die Ressourcen angibt, die durch die jeweilige Cloud erhalten werden können.

3. Verfahren nach Anspruch 1 und 2, wobei die Cloud-Ressourcenrichtlinie einer Cloud durch einen Cloud-Administrator der jeweiligen Cloud ausgestaltet wird.

4. Verfahren nach einem der vorangehenden Ansprüche 1 bis 3, wobei die Cloud-Ressourcenrichtlinie einer Cloud Regeln umfasst, die einen generierten Mindest-Ressourcengrad an Ressourcen angeben, die durch den Infrastrukturanbieter für die jeweilige Cloud bereitzustellen sind, und/oder Regeln umfasst, die einen maximalen Ressourcengrad an Ressourcen angeben, die durch den Infrastrukturanbieter für die jeweilige Cloud bereitzustellen sind, und/oder Regeln umfasst, die einen Zeitablauf, einen Zeitraum oder einen Zeitplan zum Bereitstellen von Ressourcen durch den Infrastrukturanbieter für die jeweilige Cloud angeben.

5. Verfahren nach einem der vorangehenden Ansprüche 1 bis 4, wobei die Cloud-Ressourcenrichtlinien der verschiedenen Clouds in der Ressourcenrichtliniendatenbank (3) des Infrastrukturanbieters gespeichert sind.

6. Verfahren nach Anspruch 1, des Weiteren umfassend:
Verifizieren, durch den Ressourcenmakler (2), ob die Ressourcen, die durch den anfragenden Steuerungsknoten der jeweiligen Cloud angefordert wurden, mit der Cloud-Ressourcenrichtlinie der jeweiligen Cloud übereinstimmen, die aus der Ressourcenrichtliniendatenbank (3) des Infrastrukturanbieters gelesen wurde.

7. Verfahren nach Anspruch 6, wobei der Berechnungsknoten des Infrastrukturanbieters eine Ressourcenzuweisungsbestätigung (*Resource Allocation Confirmation, RACONF*) an den anfragenden Steuerungsknoten der Cloud sendet, welche die verfügbaren und verifizierten Ressourcen angibt.

8. Verfahren nach Anspruch 7, wobei die verfügbaren und verifizierten Ressourcen des Infrastrukturanbieters, die in der RACONF angegeben sind, durch die Steuerungsvorrichtung (1) der Cloud zugewiesen werden, die den anfragenden Steuerungsknoten umfasst.

9. Verfahren nach einem der vorangehenden Ansprüche 1 bis 8, wobei die Ressourcen Hardware-Ressourcen umfassen, die Infrastruktur-Hardware-Ressourcen umfassen, die durch den Infrastrukturanbieter bereitgestellt werden.

10. Verfahren nach einem der vorangehenden Ansprüche 1 bis 9, wobei die Ressourcen Berechnungsressourcen zum Ausführen von Berechnungen und/oder Hypervisor-Ressourcen und/oder Peripheral Component Interconnect-Ressourcen und/oder Datenspeicherungs- und/oder Speicher- und/oder Netzwerkressourcen umfassen.

11. Vorrichtung (1) zum Ressourcenmanagement von Ressourcen (R), umfassend:
einen Ressourcenmakler (2) eines Infrastrukturanbieters, wobei der Ressourcenmakler (2) dafür ausgelegt ist, durch den Infrastrukturanbieter bereitgestellte Ressourcen zu slicen und die geslicten Ressourcen verschiedenen Clouds auf der Basis zuvor festgelegter Cloud-Ressourcenrichtlinien der jeweiligen Clouds, die in einer Ressourcenrichtliniendatenbank (3) des Infrastrukturanbieters gespeichert sind, zuzuweisen,
wobei der Infrastrukturanbieter einen Berechnungsknoten (*Computation Node, CN*), eine Steuerungsvorrichtung (1) und die Ressourcenrichtliniendatenbank (3) umfasst, und die Steuerungsvorrichtung (1) den Ressourcenmakler (2) umfasst,
wobei jede der Clouds mindestens einen Steuerungsknoten umfasst, der dafür ausgestaltet ist, eine Ressourcenanfrage (*Resource Inquiry, RINQ*) nach verfügbaren Ressourcen des Infrastrukturanbieters an den Berechnungsknoten zu senden,
wobei der Berechnungsknoten des Infrastrukturanbieters dafür konfiguriert ist, die empfangene RINQ an den Ressourcenmakler (2) weiterzuleiten, der dafür ausgestaltet ist, die Cloud-Ressourcenrichtlinie der jeweiligen Cloud aus der Ressourcenrichtliniendatenbank (3) zu lesen, und
der Ressourcenmakler (2) des Weiteren dafür konfiguriert ist, eine Ressourcenantwortnachricht (*Resource Response Message, RRMSG*), die Ressourcen des Infrastrukturanbieters angibt, die verfügbar sind und die durch den Ressourcenmakler (2) des Infrastrukturanbieters verifiziert wurden, an den Berechnungsknoten des Infrastrukturanbieters, der die RINQ von dem anfragenden Steuerungsknoten der jeweiligen Cloud empfangen hat, zu senden.

12. Vorrichtung nach Anspruch 11, wobei der Ressourcenmakler (2) eine Verarbeitungseinheit umfasst, die eine Richtlinienausgestaltungsschnittstelle (4) zur Ausgestaltung von Cloud-Ressourcenrichtlinien verschiedener Clouds unter Verwendung von Ressourcen, die durch den Infrastrukturanbieter bereitgestellt werden, durch Cloud-Administratoren der jeweiligen Clouds aufweist.

13. Vorrichtung nach Anspruch 11 oder 12, wobei der Ressourcenmakler (2) des Infrastrukturanbieters Zugang zu der Ressourcenrichtliniendatenbank (3) hat, um ausgestaltete Cloud-Ressourcenrichtlinien hinaufzuladen und/oder Cloud-Ressourcenrichtlinien aus der Ressourcenrichtliniendatenbank (3) des Infrastrukturanbieters zu laden.

14. Vorrichtung nach einem der Ansprüche 11 bis 13, wobei eine Cloud-Ressourcenrichtlinie einer Cloud, die in der Ressourcenrichtliniendatenbank (3) des Infrastrukturanbieters gespeichert ist, Regeln umfasst, die einen garantierten Mindest-Ressourcengrad an Ressourcen angeben, die durch den Infrastrukturanbieter für die jeweilige Cloud bereitzustellen sind, und/oder Regeln umfasst, die einen maximalen Ressourcengrad an Ressourcen angeben, die durch den Infrastrukturanbieter für die jeweilige Cloud bereitzustellen sind, und/oder Regeln umfasst, die einen Zeitablauf oder einen Zeitraum zum Bereitstellen von Ressourcen durch den Infrastrukturanbieter für die jeweilige Cloud angeben.

## Revendications

1. Procédé de gestion de ressources de ressources de nuage, comprenant les étapes consistant à :
découper (S1) des ressources fournies par un fournisseur d'infrastructure comprenant un noeud de calcul, un appareil de commande (1) et une base de données de politiques de ressources (3) ; et
affecter (S2) les ressources découpées à des nuages différents en fonction de politiques de ressources de nuages prédéterminées des nuages respectifs, chacun des nuages comprenant au moins un noeud de commande ;
envoyer, par le noeud de commande du nuage respectif, une requête de ressources *Resource Inquiry, RINQ*) pour des ressources disponibles du fournisseur d'infrastructure au noeud de calcul ;
transmettre, par le noeud de calcul du fournisseur d'infrastructure, la RINQ reçue à un courtier de ressources (2) de l'appareil de commande (1) qui lit la politique de ressources de nuage du nuage respectif à partir de la base de données de politiques de ressources (3) ; et
envoyer, par le courtier de ressources (2), un message de réponse de ressources (*Resource Response Message, RRMSG*) indiquant des ressources du fournisseur d'infrastructure qui sont disponibles et qui ont été vérifiées par le courtier de ressources (2) du fournisseur d'infrastructure au noeud de calcul du fournisseur d'infrastructure ayant reçu la RINQ à partir du noeud de commande requérant du nuage respectif.

2. Procédé selon la revendication 1, dans lequel chaque nuage comprend au moins une politique de ressources de nuage associée, indiquant des ressources pouvant être obtenues par le nuage respectif.

3. Procédé selon la revendication 1 et 2, dans lequel la politique de ressources de nuage d'un nuage est configurée par un administrateur de nuage du nuage respectif.

4. Procédé selon l'une quelconque des revendications précédentes 1 à 3, dans lequel la politique de ressources de nuage d'un nuage comprend des règles indiquant un niveau de ressources minimum généré de ressources à fournir par le fournisseur d'infrastructure pour le nuage respectif et/ou des règles indiquant un niveau de ressources maximum de ressources à fournir par le fournisseur d'infrastructure pour le nuage respectif et/ou des règles indiquant un délai, une période de temps, ou un planning pour fournir des ressources par le fournisseur d'infrastructure pour le nuage respectif.

5. Procédé selon l'une quelconque des revendications précédentes 1 à 4, dans lequel les politiques de ressources de nuages des différents nuages sont stockées dans la base de données de politiques de ressources (3) dudit fournisseur d'infrastructure.

6. Procédé selon la revendication 1, comprenant en outre de :
vérifier, par le courtier de ressources (2), si les ressources demandées par le noeud de commande requérant du nuage respectif sont conformes à la politique de ressources de nuage du nuage respectif lue dans la base de données de politiques de ressources (3) du fournisseur d'infrastructure.

7. Procédé selon la revendication 6, dans lequel le noeud de calcul du fournisseur d'infrastructure envoie une confirmation d'allocation de ressources (*Resource Allocation Confirmation, RACONF*) au noeud de commande requérant du nuage indiquant les ressources disponibles et vérifiées.

8. Procédé selon la revendication 7, dans lequel les ressources disponibles et vérifiées du fournisseur d'infrastructure telles qu'indiquées dans la RACONF sont allouées par l'appareil de commande (1) au nuage comprenant le noeud de commande requérant.

9. Procédé selon l'une quelconque des revendications précédentes 1 à 8, dans lequel les ressources comprennent des ressources matérielles comprenant des ressources matérielles d'infrastructure fournies par le fournisseur d'infrastructure.

10. Procédé selon l'une quelconque des revendications précédentes 1 à 9, dans lequel les ressources comprennent des ressources de calcul pour effectuer des calculs et/ou des ressources d'hyperviseur et/ou des ressources d'interconnexion de composants périphériques et/ou des ressources de stockage de données et/ou de mémoire et/ou de réseau.

11. Appareil (1) pour la gestion de ressources de ressources, (R), comprenant :
un courtier de ressources (2) d'un fournisseur d'infrastructure, ledit courtier de ressources (2) étant conçu pour découper des ressources fournies par le fournisseur d'infrastructure et affecter les ressources coupées à différents nuages sur la base de politiques de ressources de nuages prédéterminées des nuages respectifs stockées dans une base de données de politiques de ressources (3) dudit fournisseur d'infrastructure,
ledit fournisseur d'infrastructure comprenant un noeud de calcul (*Computation Node, CN*) un appareil de commande (1) et la base de données de politiques de ressources (3), et ledit appareil de commande (1) comprenant ledit courtier de ressources (2),
chacun des nuages comprenant au moins un noeud de commande configuré pour envoyer une requête de ressources (*Resource Inquiry, RINQ*) pour des ressources disponibles du fournisseur d'infrastructure au noeud de calcul,
le noeud de calcul du fournisseur d'infrastructure étant configuré pour transmettre la RINQ reçue au courtier de ressources (2), qui est configuré pour lire la politique de ressources de nuage du nuage respectif à partir de la base de données de politiques de ressources (3), et le courtier de ressources (2) étant en outre configuré pour envoyer un message de réponse de ressources (*Resource Response Message, RRMSG*) indiquant les ressources du fournisseur d'infrastructure qui sont disponibles et qui ont été vérifiées par le courtier de ressources (2) du fournisseur d'infrastructure au noeud de calcul du fournisseur d'infrastructure ayant reçu la RINQ à partir du noeud de commande requérant du nuage.

12. Appareil selon la revendication 11, dans lequel le courtier de ressources (2) comprend une unité de traitement ayant une interface de configuration de politiques pour la configuration de politiques de ressources de nuages de différents nuages en utilisant des ressources fournies par le fournisseur d'infrastructure par des administrateurs de nuage des nuages respectifs.

13. Appareil selon la revendication 11 ou 12, dans lequel le courtier de ressources (2) du fournisseur de ressources a accès à la base de données de politiques de ressources (3) pour télécharger des politiques de ressources de nuages configurées et/ou charger des politiques de ressources de nuages à partir de la base de données de politiques de ressources (3) du fournisseur d'infrastructure.

14. Appareil selon l'une quelconque des revendications 11 à 13, dans lequel une politique de ressources de nuage d'un nuage stockée dans la base de données de politiques de ressources (3) du fournisseur d'infrastructure comprend des règles indiquant un niveau de ressources minimum garanti de ressources à fournir par le fournisseur d'infrastructure au nuage respectif et/ou des règles indiquant un niveau de ressources maximum à fournir par le fournisseur d'infrastructure au nuage respectif et/ou des règles indiquant un délai ou une période de temps pour fournir des ressources par le fournisseur d'infrastructure au nuage respectif.
